(19) Europäisches Patentamt
European Patent Office
Office européen des brevets

(11) **EP 4 080 605 A1**

(12) **EUROPEAN PATENT APPLICATION**
published in accordance with Art. 153(4) EPC

(43) Date of publication:
**26.10.2022 Bulletin 2022/43**

(21) Application number: **20903484.2**

(22) Date of filing: **16.12.2020**

(51) International Patent Classification (IPC):
*H01M 4/134* (2010.01)    *H01M 4/38* (2006.01)
*H01M 4/46* (2006.01)    *H01M 10/052* (2010.01)

(52) Cooperative Patent Classification (CPC):
**H01M 4/134; H01M 4/38; H01M 4/46;
H01M 10/052;** Y02E 60/10; Y02P 70/50

(86) International application number:
**PCT/JP2020/046955**

(87) International publication number:
**WO 2021/125225 (24.06.2021 Gazette 2021/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.12.2019 JP 2019229603**

(71) Applicants:
• **SUMITOMO CHEMICAL COMPANY, LIMITED
Tokyo 103-6020 (JP)**
• **Tohoku University
Sendai-shi, Miyagi 980-8577 (JP)**

(72) Inventors:
• **MATSUMOTO, Shingo
Tsukuba-shi, Ibaraki 300-3294 (JP)**
• **YAMAGUCHI, Takitaro
Tsukuba-shi, Ibaraki 300-3294 (JP)**
• **HOSHIKAWA, Hiroaki
Niihama-shi, Ehime 792-8521 (JP)**
• **ICHITSUBO, Tetsu
Sendai-shi, Miyagi 980-8577 (JP)**
• **LI, Hongyi
Sendai-shi, Miyagi 980-8577 (JP)**

(74) Representative: **Vossius & Partner
Patentanwälte Rechtsanwälte mbB
Siebertstraße 3
81675 München (DE)**

(54) **NEGATIVE ELECTRODE FOR COLLECTOR-INTEGRATED SECONDARY CELL, AND LITHIUM SECONDARY CELL**

(57)    An anode for a current collector-integrated secondary battery includes: an anode surface; and a current collector surface, in which the anode for a current collector-integrated secondary battery is a plate-shaped metal anode, and an average crystal grain size when a cross section of the metal anode is observed in a scanning ion microscope (SIM) image is 200 μm or less.

EP 4 080 605 A1

## FIG. 2

（a）

40a

40

40b

（b）

41

（c）

41

（d）

X

41a

**Description**

[Technical Field]

The present invention relates to an anode for a current collector-integrated secondary battery and a lithium secondary battery.

Priority is claimed on Japanese Patent Application No. 2019-229603, filed in Japan on December 19, 2019, the content of which is incorporated herein by reference.

[Background Art]

Attempts at putting chargeable secondary batteries into practical use not only for small-sized power sources in mobile phone applications, notebook personal computer applications, and the like but also for medium-sized or large-sized power sources in automotive applications, power storage applications, and the like have already been underway.

As an anode active material for a lithium secondary battery, a carbon-based material such as graphite capable of storing and releasing lithium ions is generally used. In recent years, silicon-based materials, which have a larger theoretical capacity than graphite-based materials, have been proposed as next-generation anode active materials.

For example, Patent Document 1 discloses an anode active material for a lithium ion secondary battery made of a crystalline metal. Patent Document 1 discloses silicon and aluminum as examples of crystalline metals.

[Citation List]

[Patent Document]

[Patent Document 1]
JP5857614B2

[Summary of Invention]

[Technical Problem]

Incidentally, an anode constituting a secondary battery is generally manufactured by supporting an anode mixture containing an anode active material and a binder on an anode current collector.

The anode active material absorbs lithium ions during charge and releases lithium ions during discharge. Here, a volume of the anode active material is changed. An anode mixture layer expands or contracts depending on a change in volume of the anode active material.

When the anode mixture layer is in close contact with a surface of the current collector, stress is applied between the current collector and the anode when the anode mixture layer expands or contracts, and deformation such as wrinkles may occur in the current collector.

The present invention has been made in view of such circumstances, and an object of the present invention is to provide an anode for a current collector-integrated secondary battery in which an anode surface and a current collector surface are integrated and which is capable of maintaining a discharge capacity of a lithium secondary battery even in a case of repeated cycles, and a lithium secondary battery including the anode for a current collector-integrated secondary battery described above.

[Solution to Problem]

Furthermore, the present invention includes the following [1] to [8].

[1] An anode for a current collector-integrated secondary battery including: an anode surface; and a current collector surface, in which the anode for a current collector-integrated secondary battery is a plate-shaped metal anode, and an average crystal grain size of crystal grains observed when a cross section of the metal anode is observed in a scanning ion microscope (SIM) image is 200 $\mu$m or less.

[2] The anode for a current collector-integrated secondary battery according to [1], in which a metal constituting the metal anode contains one or more selected from the group consisting of aluminum, silicon, tin, and lead.

[3] The anode for a current collector-integrated secondary battery according to [1] or [2], in which the metal constituting the metal anode is aluminum.

[4] The anode for a current collector-integrated secondary battery according to [3], in which a Vickers hardness of the anode surface is at least 10 HV or more and 70 HV or less.

[5] A lithium secondary battery including an electrode group that includes an anode for a current collector-integrated secondary battery including an anode surface and a current collector surface, an electrolyte, and a cathode, in which the anode for a current collector-integrated secondary battery is a plate-shaped metal anode, an average crystal grain size of crystal grains observed when a cross section of the metal anode is observed in a scanning ion microscope (SIM) image is 200 $\mu$m or less, and the anode for a current collector-integrated secondary battery satisfies one or both of the following Requirements 1 and 2,

(Requirement 1)
when the lithium secondary battery is charged, a ratio of a linear expansion coefficient $\beta1$ in a direction perpendicular to a surface facing the cathode to a linear expansion coefficient $\beta2$ in a direction parallel to the surface facing the cathode ($\beta1/\beta2$) exceeds 1.3,
(Requirement 2)
an average particle size of lithium alloy particles observed under the following conditions is less than 100 $\mu$m,
[Conditions]

first, lithium ions of 2 mAh/cm$^2$ are charged to the anode for a current collector-integrated secondary battery at a current density of 0.5 mA/cm$^2$,
next, the average particle size of the lithium alloy particles present in the anode surface is calculated from an image obtained by SEM observation.

[6] The lithium secondary battery according to [5], in which the anode for a current collector-integrated secondary battery contains one or more selected from the group consisting of aluminum, silicon, tin, and lead.

[7] The lithium secondary battery according to [5] or [6], in which the anode for a current collector-integrated secondary battery is aluminum.

[8] The lithium secondary battery according to [7], in which a Vickers hardness of the anode surface is at least 10 HV or more and 70 HV or less.

[Advantageous Effects of Invention]

According to the present invention, it is possible to provide an anode for a current collector-integrated secondary battery in which an anode surface and a current collector surface are integrated and which is capable of maintaining a discharge capacity of a lithium secondary battery even in a case of repeated cycles, and a lithium secondary battery including the anode for a current collector-integrated secondary battery described above.

[Brief Description of Drawings]

Fig. 1A is a schematic configuration view showing an example of a lithium secondary battery.
Fig. 1B is a schematic configuration view showing an example of the lithium secondary battery.
Fig. 2 is a schematic diagram explaining a mechanism of action when the present invention is applied.
Fig. 3 is a schematic diagram explaining a mechanism of action when the present invention is not applied.

[Description of Embodiments]

The term "charging" used herein means a reaction in which a metal constituting an anode and lithium is alloyed.
The term "discharging" used herein means a reaction in which lithium is released from aluminum of the anode.
In the present specification, a discharge capacity retention rate of a lithium secondary battery is measured by the following method.

(Measurement of Discharge Capacity Retention Rate)

[Manufacture of Anode]

An anode for a current collector-integrated secondary battery of the present embodiment is used as an anode.

[Manufacture of Cathode]

90 parts by mass of lithium cobalt oxide (product name: CELLSEED, manufactured by Nippon Chemical Industrial CO., LTD., average particle size (D50): 10 $\mu$m) as a cathode active material, 5 parts by mass of polyvinylidene fluoride (manufactured by Kureha Corporation) as a binder, and 5 parts by mass of acetylene black (product name: Denka Black, manufactured by Denka Company Limited) as a conductive material are mixed, and 70 parts by mass of N-methyl-2-pyrrolidone is further mixed with the mixture to prepare an electrode mixture for the cathode.

The obtained electrode mixture is coated onto an aluminum foil having a thickness of 15 $\mu$m, which is a current collector, by a doctor blade method. The coated electrode mixture is dried at 60°C for 2 hours and vacuum-dried at 150°C for 10 hours to volatilize N-methyl-2-pyrrolidone. A coating amount of the cathode active material after drying is 21.5 mg/cm$^2$.

After a laminate of the obtained electrode mixture layer and the current collector is rolled, the laminate is cut into a disk shape of $\varphi$ 14 mm to manufacture a cathode, which is a laminate of a cathode mixture layer as a material for forming lithium cobalt oxide, and the current collector.

A thickness of the cathode mixture layer after rolling is 60 $\mu$m or more and 65 $\mu$m or less, and an electrode density is 3.0 g/cm$^3$ or more and 3.5 g/cm$^3$ or less.

[Preparation of Electrolytic Solution]

An electrolytic solution obtained by dissolving LiPF$_6$ in a mixed solvent obtained by mixing ethylene carbonate (EC) and diethyl carbonate (DEC) in EC:DEC = 30:70 (volume ratio) in a ratio of 1 mol/L is prepared.

<Manufacture of Lithium Secondary Battery>

A polyethylene porous separator is disposed between the anode for a current collector-integrated secondary battery and the cathode described above and stored in a battery case (standard 2032), the electrolytic solution is injected thereinto to seal the battery case, thereby manufacturing a coin-type (full cell) lithium secondary battery having a diameter of 20 mm and a thickness of 3.2 mm.

The work of using a material that reacts with water, such as an electrolytic solution and an electrode after charging with lithium metal, is performed inside a glove box controlled to have a water value of 1 ppm or less. When the glove box is not used, work is performed in an environment having the same amount of water as the glove box and avoiding contact with water as much as possible.

[Charge/Discharge Evaluation: Initial Discharge Capacity]

The coin-type lithium secondary battery is allowed to stand at room temperature for 10 hours to sufficiently impregnate the separator and the cathode mixture layer with the electrolytic solution.

Next, initial charging and discharging is performed by charging (absorbing Li to Al) to 4.2 V at a constant current of 1 mA at room temperature, constant-current/constant-voltage charging for charging at a constant voltage of 4.2 V for 5 hours, and then discharging (releasing Li from Al) to 3.4 V at a constant current of 1 mA.

A value obtained by measuring the discharge capacity is referred to as an "initial discharge capacity" (mAh).

[Charge/Discharge Evaluation: Charge/Discharge Efficiency at 20th Cycle]

After the initial charging and discharging, charging at 1 mA and discharging at 1 mA are repeated in the same manner and under the same conditions as the initial charging and discharging.

The life evaluation in tests at the 20th cycle is measured, and a discharge capacity retention rate is calculated by the following Expression 1 or 2.

(Expression 1)

Discharge capacity retention rate (%)

= discharge capacity (mAh) at 20th cycle/initial discharge capacity (mAh) x 100

(Expression 2)

Discharge capacity retention rate (%)

= discharge capacity (mAh) at 20th cycle/discharge capacity (mAh) at second

cycle x 100

When the discharge capacity retention rate calculated by the above-described (Expression 1) or (Expression 2) is 80% or more, it is evaluated that the discharge capacity of the lithium secondary battery can be maintained even when the cycle is repeated.

<Anode for Current Collector-Integrated Secondary Battery>

Hereinafter, the "anode for a current collector-integrated secondary battery" may be abbreviated as a "current collector-integrated anode".

The current collector-integrated anode serves as both the anode and the anode current collector. That is, the current collector-integrated anode does not require a separate current collector member.

Further, in the manufacturing process of a secondary battery, a process of supporting the anode active material by the current collector is not required.

Moreover, when the anode active material is supported by a current collector of a separate member, a problem in that an anode active material layer is easily peeled off from the current collector occurs. The current collector-integrated anode is one member with the current collector and the anode. Therefore, there is an advantage in that the problem of peeling-off of the current collector and the anode active material layer does not occur in the first place.

The current collector-integrated anode is a plate-shaped metal anode. The current collector-integrated anode includes an anode surface and a current collector surface.

The anode surface of the current collector-integrated anode is involved in charging or discharging and functions as an anode. The current collector surface of the current collector-integrated anode is formed of an excessive metal component that is not involved in charging or discharging, and functions as a current collector.

In the present embodiment, the term "plate shape (plate-shaped)" means a three-dimensional shape having at least two facing planes.

In the "plate-shaped" metal anode, a distance between the two facing planes described above corresponds to a thickness of the metal anode. Various values can be adopted for the thickness of the metal anode. The plate-shaped metal anode includes a thin film-shaped electrode having flexibility that is easy to curve or bend, and a thin plate-shaped electrode that is difficult to curve or bend.

«Size of Crystal Grains»

An average crystal grain size when a cross section of the metal anode is observed in a scanning ion microscope (SIM) image is 200 $\mu$m or less. Hereinafter, an observation by the scanning ion microscope image may be referred to as "SIM observation", an image observed by the scanning ion microscope image may be referred to as a "SIM image", and a photograph obtained by the scanning ion microscope image observation may be referred to as a "SIM photograph".

The average crystal grain size of crystal grains is preferably 100 $\mu$m or less, more preferably 50 $\mu$m or less, still more preferably 10 $\mu$m or less, and particularly preferably 5 $\mu$m or less.

The average crystal grain size is preferably 1 $\mu$m or more in terms of reducing production costs.

The above-described upper limit value and lower limit value of the average crystal grain size can be randomly combined together.

Examples of the combination of the upper limit value and the lower limit value of the average crystal grain size include 1 $\mu$m or more and 200 $\mu$m or less, 1 $\mu$m or more and 100 $\mu$m or less, 1 $\mu$m or more and 50 $\mu$m or less, and 1 $\mu$m or more and 5 $\mu$m or less.

<SIM Observation of Cross Section of Metal Anode>

SIM observation of a cross section of the metal anode can be performed by the following method.

First, an uncharged plate-shaped metal foil is processed to form a cross section. The following focused ion beam processing apparatus or composite beam processing observation apparatus is used for processing. Specifically, the metal anode is cut in a direction perpendicular to the surface of the metal anode facing the cathode using the following apparatus to obtain a cross section.

Next, the obtained cross section is observed using the following focused ion beam processing apparatus or composite beam processing observation apparatus.

(Measurement Condition 1)

Focused ion beam processing observation apparatus: FB-2100 (manufactured by Hitachi High-Technologies Corporation)
Ion source: gallium liquid metal
Acceleration voltage: 40 kV
Magnification: x700 or more and x50,000 or less

(Measurement Condition 2)

Composite beam processing observation apparatus: JIB-4500 (JEOL Ltd.)
Ion source: gallium liquid metal
Acceleration voltage: 1 kV or more and 30 kV or less
Magnification: x100 or more and x300,000 or less (low magnification mode: x30)

<Measurement of Average Crystal Grain Size of Crystal Grains>

The average crystal grain size of the crystal grains observed when the cross section of the metal anode is observed by SIM is obtained by the following method.

First, 50 crystal grains are arbitrarily extracted from the SIM photograph obtained by the above method.

Next, for each of the crystal grains, the distance between parallel lines that are drawn in a predetermined direction to sandwich the projected image of the crystal grains (directed diameter) is measured as the crystal grain size of the crystal grains.

An arithmetic average value of the obtained crystal grains is set as the average crystal grain size of the crystal grains.

When a current collector-integrated anode having small metal crystal grains constituting the anode surface is used, the discharge capacity of the lithium secondary battery can be maintained even when the cycle is repeated. This will be described by taking a case where the metal constituting the anode surface is aluminum as an example.

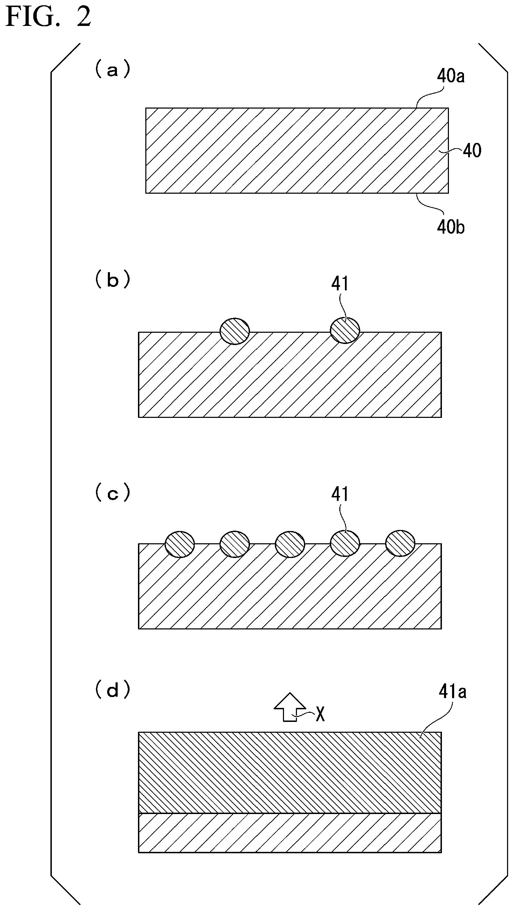

A current collector-integrated anode 40 shown in Fig. 2(a) includes an anode surface 40a and a current collector surface 40b. The anode surface 40a includes crystal grains having a crystal grain size of 200 $\mu$m or less, which is obtained by the SIM observation of the cross section.

When lithium is absorbed in the anode surface 40a, aluminum-lithium alloy particles 41 are formed. This situation is shown in Fig. 2(b).

As the absorption of lithium proceeds, lithium is selectively absorbed in gaps between the aluminum-lithium alloy particles 41. This situation is shown in Fig. 2(c). Therefore, the aluminum-lithium alloy particles 41 are uniformly formed on the surface facing the cathode.

When the formation of the aluminum-lithium alloy particles 41 proceeds uniformly, it is presumed that the aluminum-lithium alloy particles 41 become an aluminum-lithium alloy particle layer 41a. Therefore, it is presumed that reaction proceeds in a direction represented by a reference sign X in Fig. 2(d) and the aluminum-lithium alloy particle layer 41a expands in the vertical direction. Specifically, the direction represented by the reference sign X is a direction perpendicular to the surface facing the cathode. In this case, it is considered that deformation such as wrinkles and cracks hardly occurs on the electrode. If the deformation hardly occurs, the current collector-integrated anode is unlikely to deteriorate during charge and discharge. Therefore, it is considered that the discharge capacity of the lithium secondary battery can be maintained even when the cycle is repeated.

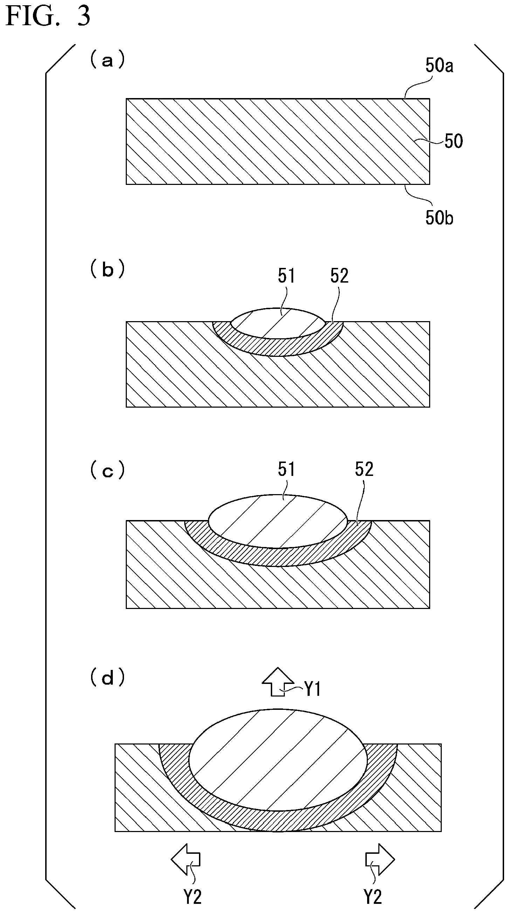

On the other hand, a case where the crystal grain size is large and the above range is not satisfied will be described with reference to Fig. 3.

A current collector-integrated anode 50 shown in Fig. 3(a) includes an anode surface 50a and a current collector surface 50b. The anode surface 50a includes crystal grains having a crystal grain size of 200 $\mu$m or less, which is obtained by the SIM observation of the cross section.

When lithium is absorbed in the anode surface, aluminum-lithium alloy particles 51 are formed. This situation is shown in Fig. 3(b). A strain 52 shown in Fig. 3(b) is generated around the aluminum-lithium alloy particle 51.

Moreover, as the absorption of lithium proceeds, lithium is selectively absorbed in the strain 52, and the aluminum-lithium alloy particle 51 is locally grown. This situation is shown in Fig. 3(c). Therefore, it is presumed that the aluminum-lithium alloy particle layer 51a expands in directions represented by reference signs Y1 and Y2 in Fig. 3(d). Specifically, the direction represented by the reference sign Y1 is a direction perpendicular to the surface facing the cathode. Specifically, the direction represented by the reference sign Y2 is a direction parallel to the surface facing the cathode. The aluminum-lithium alloy particle layer 51a also expands in a direction represented by the reference sign Y2, in addition to the direction represented by the reference sign Y1.

As a result, wrinkles, cracks, and the like are generated on the electrode, and the electrode is easily deformed. This causes deterioration during charge and discharge.

An action effect has been described by taking a case where the metal constituting the anode surface is aluminum as an example, but it is considered that the same action is obtained even if silicon, tin, and lead are used.

### «Constituent Metal»

The metal constituting the metal anode preferably contains one or more selected from the group consisting of aluminum, silicon, tin, and lead.

Specifically, as the metal constituting the metal anode, high-purity aluminum, alloys of high-purity aluminum with other metals, high-purity silicon, high-purity tin, and high-purity lead are exemplary examples. The metal constituting the metal anode is preferably aluminum, and more preferably high-purity aluminum or an alloy of high-purity aluminum with another metal.

The metal anode is preferably high-purity aluminum or a high-purity aluminum alloy.

The high-purity aluminum is aluminum having a purity of 99% by mass.

The high-purity aluminum alloy is an alloy of aluminum having a purity of 99% by mass with another metal.

### • High-Purity Aluminum

High-purity aluminum will be described.

The purity of the high-purity aluminum is preferably 99% by mass or more, more preferably 99.9% by mass or more, still more preferably 99.95% by mass or more, and particularly preferably 99.99% by mass or more. The purity of high-purity aluminum can be confirmed by a solid emission spectrochemical analysis method.

An example of the purification method for purifying aluminum to the above-described purity can include a segregation method and a three-layer electrolysis method.

### •• Segregation Method

The segregation method is a purification process that utilizes a segregation phenomenon when molten aluminum is easily solidified. As for the segregation method, a plurality of methods have been put into practical use. As for one form of the segregation method, there is a method of pouring molten aluminum into a container, and solidifying the purified aluminum from the bottom while heating and stirring the molten aluminum at the top while rotating the container. Aluminum having a purity of 99% by mass or more can be obtained by the segregation method.

### •• Three-Layer electrolysis Method

As one form of the three-layer electrolysis method, first, an aluminum (for example, about one grade having a purity of 99% by mass in JIS-H2102) is charged into an Al-Cu alloy layer. The aluminum metal is then used as an anode in a molten state, and an electrolytic bath containing, for example, aluminum fluoride and barium fluoride is disposed thereon to precipitate high-purity aluminum on a cathode.

The high-purity aluminum having a purity of 99.999% by mass or more can be obtained by the three-layer electrolysis method.

The refining method for highly purifying aluminum is not limited to the segregation method and the three-layer electrolysis method, and other known methods such as a zone melting refining method and an ultra-high vacuum melting refining method may be used.

### • High-Purity Aluminum Alloy

As an element added to the high-purity aluminum to form a high-purity aluminum alloy, one or more elements selected from the group consisting of Si, Ge, Mg, Ni, Mn, Zn, and Cd are exemplary examples. These elements may be referred to as intentionally added elements.

When an alloy of high-purity aluminum and another metal is used, a content of another metal contained in the total amount of the high-purity aluminum alloy is preferably 0.1% by mass or more, more preferably 0.5% by mass or more, and still more preferably 0.7% by mass or more.

In addition, the content of another metal contained in the total amount of the high-purity aluminum alloy is 1.0% by mass or less, more preferably 0.9% by mass or less, and still more preferably 0.8% by mass or less.

The above-described upper limit value and lower limit value can be randomly combined together. The content of another metal contained in the total amount of the high-purity aluminum alloy is preferably 0.1% by mass or more and 1.0% by mass or less, more preferably 0.5% by mass or more and 0.9% by mass or less, and particularly preferably 0.7% by mass or more and 0.8% by mass or less.

In the high-purity aluminum alloy, a total content of the metal components excluding the intentionally added elements is preferably 0.1% by mass or less, more preferably 0.05% by mass or less, and still more preferably 0.01% by mass, with respect to the total amount of the aluminum alloy.

The lower limit value of the total content of the metal components excluding the intentionally added element is not particularly limited, and examples thereof include 0% by mass or more, 0.0001% by mass or more, and 0.0002% by mass or more.

<<Vickers Hardness>>

When the metal constituting the metal anode is aluminum, a Vickers hardness of the anode surface is at least preferably 10 HV or more and 70 HV or less, more preferably 20 HV or more and 70 HV or less, and still more preferably 30 HV or more and 70 HV or less.

If the Vickers hardness is the upper limit value or less, it is presumed that a strain of a crystal structure when lithium is absorbed can be relaxed, and the crystal structure can be thus maintained. Therefore, the discharge capacity of the lithium secondary battery can be maintained even when the cycle of the lithium secondary battery using the current collector-integrated anode is repeated.

If the Vickers hardness is equal to or more than the above lower limit value, the current collector-integrated anode hardly deteriorates during charge and discharge. Therefore, the discharge capacity of the lithium secondary battery can be maintained even when the cycle is repeated.

<Method for Measuring Vickers Hardness>

For the Vickers hardness, a value measured by the following method is used.

[Measuring Method]

As the metal anode, the Vickers hardness (HV 0.05) is measured using a micro-Vickers hardness tester. A micro-Vickers hardness is an index of hardness.

The Vickers hardness is a value measured according to JIS Z2244: 2009 "Vickers hardness test-test method".

The method for measuring Vickers hardness is as follows.

First, a diamond indenter having a regular quadrangular pyramid shape is pushed into a surface of the metal anode as a test piece with a predetermined test force.

Next, after the test force is released, a surface area of a dent is calculated from a diagonal length of the dent remaining on the surface of the metal anode as the test piece. A value obtained by dividing the test force by the surface area is the Vickers hardness.

It stipulates in JIS Z2244:2009 that a hardness symbol is changed according to the test force. In the present embodiment, the micro-Vickers hardness of HV 0.05 is used when the test force is 0.05 kgf (= 0.4903 N).

The thickness of the current collector-integrated anode is preferably 5 $\mu$m or more, more preferably 6 $\mu$m or more, and still more preferably 7 $\mu$m or more. In addition, the thickness of the metal anode 3 is preferably 200 $\mu$m or less, more preferably 190 $\mu$m or less, and particularly preferably 180 $\mu$m or less.

The above-described upper limit value and lower limit value can be randomly combined together.

As an example of the combination, the thickness of the current collector-integrated anode is preferably 5 $\mu$m or more and 200 $\mu$m or less, more preferably 6 $\mu$m or more and 190 $\mu$m or less, and particularly preferably 7 $\mu$m or more and 180 $\mu$m or less.

Moreover, the thickness of the current collector-integrated anode is preferably 5 $\mu$m or more, more preferably 10 $\mu$m or more, and still more preferably 20 $\mu$m or more. In addition, the thickness of the current collector-integrated anode is preferably 200 $\mu$m or less, more preferably 100 $\mu$m or less, and particularly preferably 50 $\mu$m or less.

The above-described upper limit value and lower limit value can be randomly combined together.

As an example of the combination, the thickness of the current collector-integrated anode is preferably 5 $\mu$m or more and 200 $\mu$m or less, more preferably 10 $\mu$m or more and 100 $\mu$m or less, and particularly preferably 20 $\mu$m or more and 50 $\mu$m or less.

The thickness of the current collector-integrated anode may be measured using a thickness gauge or a caliper.

The thickness of the current collector-integrated anode means an average value when the thickness of the current collector-integrated anode is measured at five points.

[Method for Manufacturing Current Collector-Integrated Anode]

The current collector-integrated anode can be manufactured by a manufacturing method including a casting step and a foil shape processing step in order.

• Casting Step

In the casting step, a treatment for melting aluminum at about 680°C or higher and 800°C or lower and removing and purifying known gas or non-metal inclusions (for example, vacuum treatment of molten alloy) is performed.

The vacuum treatment is performed under conditions of, for example, 700°C or higher and 800°C or lower, 1 hour or longer and 10 hours or shorter, and a vacuum degree of 0.1 Pa or higher and 100 Pa or lower.

As a treatment for purifying the high-purity aluminum or high-purity aluminum alloy, a treatment for blowing flux, inert gas, or chlorine gas into the molten aluminum can be also used.

The molten metal purified by the vacuum treatment or the like is usually cast in a casting mold to obtain an aluminum ingot. The casting mold is obtained by using iron or graphite heated to 50°C or higher and 200°C or lower. Aluminum is cast by a method of pouring a molten alloy at 680°C or higher and 800°C or lower into the casting mold. In addition, ingots can also be obtained by continuous casting, which is generally used.

An aluminum alloy ingot can be obtained by adding a predetermined amount of other metal elements to be alloyed during melting in the above-described casting step.

• Foil Shape Processing Step

The obtained aluminum ingot or aluminum alloy ingot is processed into a foil shape by subjecting to a rolling process, an extruding process, a casting process, and the like to prepare a raw material of the metal foil.

When a plate-shaped metal anode is used, the aluminum ingot or aluminum alloy ingot may be processed into a plate shape in a foil shape processing step.

In the rolling process of the ingot, for example, hot rolling and cold rolling are performed to process the aluminum ingot or the aluminum alloy ingot into a foil shape.

Examples of a temperature condition for performing hot rolling include a temperature of the aluminum ingot or the aluminum alloy ingot of 350°C or higher and 450°C or lower.

In the rolling process, the material repeatedly passes between a pair of rolling rolls to achieve a target thickness. Passing between the pair of rolling rolls is referred to as "pass".

A working ratio r (%) per pass is a thickness reduction ratio when passing through the rolling roll once, and calculated by the following expression.

$$r\ (\%) = (T_0 - T)/T_0 \times 100$$

(To: thickness before passing through the rolling roll, T: thickness after passing through the rolling roll)

In the foil shape processing step, it is preferable that the aluminum ingot or the aluminum alloy ingot be repeatedly rolled so as to have the target thickness under a condition of the working ratio r per pass of 2% or more and 20% or less.

After hot rolling and before cold rolling, a process annealing treatment may be performed.

In the process annealing treatment, for example, the hot-rolled aluminum ingot or aluminum alloy ingot may be heated to 350°C or higher and 450°C or lower, and may be allowed to cool immediately after raising the temperature.

In addition, the aluminum ingot or the aluminum alloy ingot may be allowed to cool for about 1 hour or longer to 5 hours or shorter.

By the process annealing treatment, the material of the aluminum ingot or the aluminum alloy ingot is softened to be in a state in which it is easily cold-rolled.

Cold rolling is performed, for example, at a temperature lower than a recrystallization temperature of the aluminum ingot or the aluminum alloy ingot. For example, the cold rolling may be usually performed at a temperature from room temperature to 80°C or lower. In this case, the aluminum ingot is repeatedly cold-rolled so as to have the target thickness in the die per pass under a condition of the working ratio r of 1% or more and 10% or less.

A rolled material obtained by the rolling process is subjected to a heat treatment for adjusting physical properties in general. The heat treatment after rolling is referred to as a rolled material heat treatment step.

An average crystal grain size of the rolled material can be adjusted depending on alloy compositions, rolling conditions, conditions for the rolled material heat treatment step, and the like. Among them, the average crystal grain size of the rolled material is easily affected by the conditions of the rolled material heat treatment step. For example, the higher the heat treatment temperature in the rolled material heat treatment step and the longer the heat treatment time, the larger the average crystal grain size.

In order to set the average crystal grain size to 200 $\mu$m or less, it is preferable not to perform the rolled material heat treatment step. More specifically, in order to set the average crystal grain size to 200 $\mu$m or less, it is preferable not to perform the rolled material heat treatment step at a high temperature of 450°C or higher, for example.

Moreover, in a case of performing the rolled material heat treatment step, it is preferable to perform the rolled material heat treatment step under the heat treatment condition capable of maintaining a range of the Vickers hardness exceeding 50% as compared with that before the heat treatment. Specifically, for example, conditions at a temperature range of 50°C or higher and 300°C or lower for 1 hour or longer and 15 hours or shorter in the atmosphere are exemplary examples. In addition, for example, conditions at a temperature range of 50°C or higher and 400°C or lower for 1 hour or longer and 15 hours or shorter in the atmosphere are exemplary examples.

<Lithium Secondary Battery>

A lithium secondary battery will be described. The work of using a material that reacts with water, such as an electrolytic solution and an electrode after charging with lithium metal, is performed inside a glove box controlled to have a water value of 1 ppm or less. When the glove box is not used, work is performed in an environment having the same amount of water as the glove box and avoiding contact with water as much as possible.

[Overall Configuration]

The lithium secondary battery includes an electrode group including an anode for a current collector-integrated secondary battery, an electrolyte, and a cathode. The anode for a current collector-integrated secondary battery includes an anode surface and a current collector surface.

Hereinafter, a lithium secondary battery using a lithium cathode active material will be described as an example.

[Anode for Current Collector-Integrated Secondary Battery]

The anode for a current collector-integrated secondary battery is a plate-shaped metal anode. An average crystal grain size of the observed crystal grains when a cross section of the metal anode is observed in a scanning ion microscope (SIM) image is 200 $\mu$m or less.

Further, the anode for a current collector-integrated secondary battery satisfies one or both of the following Requirement 1 or 2.

(Requirement 1)

When the anode for a current collector-integrated secondary battery absorbs and expands lithium ions, a ratio of a linear expansion coefficient $\beta1$ in a direction perpendicular to the surface facing the cathode to a linear expansion coefficient $\beta2$ in a direction parallel to the surface facing the cathode ($\beta1/\beta2$) exceeds 1.3.

<Measurement of Requirement 1>

The ratio of the linear expansion coefficient ($\beta1/\beta2$) specified in Requirement 1 can be measured by the following method.

First, lithium ions of 5 mAh/cm$^2$ are absorbed in the anode for a current collector-integrated secondary battery at a current density of 0.5 mA/cm$^2$.

Next, each of the linear expansion coefficient $\beta1$ in the direction perpendicular to the surface facing the cathode and the linear expansion coefficient $\beta2$ in the direction parallel to the surface facing the cathode is calculated by the following methods.

Perpendicular direction expansion coefficient $\beta1$: First, thicknesses of the current collector-integrated anode are measured at 10 points before and after charging with a micrometer. Next, an average value of each of the thicknesses before and after charging is obtained. The perpendicular direction expansion coefficient $\beta1$ is the average value of the thickness after charging/the average value of the thickness before charging.

Parallel direction expansion coefficient β2: Widths of the current collector-integrated anode are measured at 10 points before and after charging with an optical microscope. The width of the current collector-integrated anode is a width of the current collector-integrated anode in a longitudinal direction. Next, an average value of each of the widths before and after charging is obtained. The parallel direction expansion coefficient β2 is the average value of the width after charging/the average value of the width before charging.

Next, the ratio of the linear expansion coefficient (β1/β2) is obtained.

The ratio of the linear expansion coefficient (β1/β2) is preferably 1.4 or more, more preferably 1.5 or more, and particularly preferably 1.7 or more.

When the ratio of the linear expansion coefficient (β1/β2) is equal to or more than the above lower limit value, it means that an aluminum-lithium alloy uniformly expands in the direction perpendicular to the surface facing the cathode.

In this case, crystal defects are less likely to occur, and the anode current collector is less likely to deteriorate during charge and discharge. Therefore, it is considered that the discharge capacity of the lithium secondary battery can be maintained even when the cycle is repeated.

Further, it is considered that if unevenness, cracks, and the like occur on the surface of the anode facing the cathode after expansion or contraction and a specific area increases, a reaction specific surface area of the surface in the following absorbing and releasing of lithium increases, and a reaction speed increases.

The upper limit value of the ratio of linear expansion coefficient (β1/β2) is not particularly limited, and examples thereof include 5 or less, 4 or less, and 3 or less.

The above-described upper limit value and lower limit value of the ratio of linear expansion coefficient (β1/β2) can be randomly combined together.

As an example of the combination, the ratios (β1/β2) of 1.4 or more and 5 or less, 1.5 or more and 4 or less, and 1.7 or more and 3 or less are exemplary examples.

<Measurement of Requirement 2>

The anode for a current collector-integrated secondary battery has an average particle size of lithium alloy particles observed under the following conditions of less than 100 μm.

[Conditions]

First, lithium ions of 2 mAh/cm$^2$ are absorbed in the anode for a current collector-integrated secondary battery at a current density of 0.5 mA/cm$^2$.

Next, the average particle size of the lithium alloy particles present in the anode surface is calculated from an image obtained by SEM observation.

When lithium ions are absorbed in the current collector-integrated anode, lithium alloy particles are formed on the anode surface. The lithium alloy particles are, for example, lithium-aluminum alloys. When the anode surface is observed by the SEM after lithium ions are absorbed, the particles are observed on the anode surface.

When lithium ions are generated according to the above [Conditions], all the observed particles are determined as lithium alloy particles, and the average particle size thereof is measured.

The average particle size of lithium alloy particles is obtained by the following method.

First, the anode for a current collector-integrated secondary battery after lithium absorption is placed on a sample stage.

Next, an electron beam having an acceleration voltage of 20 kV is irradiated to perform the SEM observation on the anode for a current collector-integrated secondary battery with JSM-5510 manufactured by JEOL Ltd. Here, the magnification is x100 or more and x2000 or less.

Next, 50 lithium alloy particles are randomly extracted from an image obtained by the SEM observation (SEM photograph). For each of the extracted lithium alloy particles, the distance between parallel lines that are drawn in a predetermined direction to sandwich the projected image of the lithium alloy particle (directed diameter) is measured as the particle size of the lithium alloy particle. The arithmetic average value of the obtained particle size of the lithium alloy particles is regarded as the average particle size of the lithium alloy particles.

The average particle size of the lithium alloy particles specified in Requirement 2 is preferably 100 μm or less, more preferably 50 μm or less, and particularly preferably 20 μm or less.

When the average particle size of the lithium alloy particles is equal to or less than the above upper limit value, it means that, for example, the aluminum-lithium alloy is not locally grown, and the aluminum-lithium alloy uniformly expands in a direction perpendicular to the surface facing the cathode.

In this case, crystal defects are less likely to occur, and the current collector-integrated anode is less likely to deteriorate during charge and discharge. Therefore, it is considered that the discharge capacity of the lithium secondary battery can be maintained even when the cycle is repeated.

The lower limit value of the average particle size of lithium alloy particles specified in Requirement 2 is not particularly limited, and examples thereof include 1 μm or more, 2 μm or more, and 3 μm or more.

The above-described upper limit value and lower limit value of the average particle size of the lithium alloy particles specified in Requirement 2 can be randomly combined together.

As an example of the combination, the average particle sizes of the lithium alloy particles specified in Requirement 2 of 1 μm or more and 100 μm or less, 2 μm or more and 50 μm or less, and 3 μm or more and 20 μm or less are exemplary examples.

The current collector-integrated anode may satisfy either Requirement 1 or Requirement 2 or preferably satisfies both Requirement 1 and Requirement 2.

The current collector-integrated anode preferably contains one or more selected from the group consisting of aluminum, silicon, tin, and lead.

The current collector-integrated anode preferably has the Vickers hardness of the anode surface of at least 10 HV or more and 70 HV or less.

It is preferable that there be no change in a profile obtained when the anode surface of the current collector-integrated anode is subjected to X-ray diffraction measurement using CuKα as a radiation source, in a case where a measurement position is changed on the surface of the metal anode.

The X-ray diffraction measurement using CuKα as a radiation source is specifically, for example, a measurement in which a range of 2θ is set to 10° to 90° by the following apparatus and measurement conditions.

[Apparatus And Measurement Conditions]

Apparatus: X-ray diffractometer X'Pert PRO MPD (Spectris), slit width: 2 mm
Voltage: 45 KV
Current: 40 mA
Scan speed: 4 °/min
Step: 0.016°

If there is no change in the profile obtained by the above X-ray diffraction measurement even if the measurement position on the surface of the metal anode is changed, it is considered that an average profile having little unevenness in the crystal orientation and many crystal grains is obtained. Therefore, it is presumed that the size of crystal grains of the metal anode is small, and as a result, Requirement 2 is as small as less than 100 μm.

Here, the expression "there is no change in the profile" means that a peak position of the maximum intensity of an XRD profile and a peak position of the second highest intensity match even if the measurement position is changed. In addition, the change in the peak position includes a shift due to a slight structural change. Thus, if the change is within ±2° based on a peak top, it is determined that the peak position of the maximum intensity and the peak position of the second highest intensity are at the same peak and match, which is referred to as "there is no change in the profile".

On the other hand, when the measurement position is changed, it is determined that "there is a change in the profile" in a case where the peak position of the maximum intensity of the XRD profile or the peak position of the second highest intensity is different. In this case, it is considered that the size of crystal grains of the metal anode is large with respect to an irradiation diameter of the XRD, and the profile of specific crystal grains is obtained. Therefore, as a result, Requirement 2 exceeds 100 μm and the size of crystal grains of the metal anode is large.

[Cathode]

The cathode can be manufactured by, first, adjusting a cathode mixture containing a cathode active material, a conductive material, and a binder and supporting the cathode mixture by a cathode current collector.

(Cathode Active Material)

As the cathode active material, a material formed of a lithium-containing compound or another metal compound can be used. Examples of the lithium-containing compound include a lithium cobalt composite oxide having a layered structure, a lithium nickel composite oxide having a layered structure, and a lithium manganese composite oxide having a spinel structure.

Further, examples of another metal compound include oxides such as titanium oxide, vanadium oxide, or manganese dioxide, and sulfides such as titanium sulfide or molybdenum sulfide.

(Conductive Material)

As the conductive material in the cathode, a carbon material can be used. As the carbon material, graphite powder, carbon black (for example, acetylene black), a fibrous carbon material, and the like can be exemplary examples.

Carbon black is fine and has a large surface area. Therefore, conductivity inside the cathode can be enhanced by adding a small amount of the conductive material to the cathode mixture, and a charge/discharge efficiency and output characteristics can be improved.

On the other hand, when an excess of carbon black is added, both the binding force between the cathode mixture and the cathode current collector attributed to the binder and the binding force inside the cathode mixture deteriorate, which, conversely, acts as a cause for an increase in the internal resistance.

The fraction of the conductive material in the cathode mixture is preferably 5 parts by mass or more and 20 parts by mass or less with respect to 100 parts by mass of the cathode active material. In the case of using a fibrous carbon material such as a graphitized carbon fiber or a carbon nanotube as the conductive material, it is also possible to decrease the fraction of the conductive material in the cathode mixture.

(Binder)

A thermoplastic resin can be used as a binder in the cathode. As the thermoplastic resin, fluororesins and polyolefin resins can be exemplary examples.

As the fluororesin, polyvinylidene fluoride (hereinafter, referred to as PVdF in some cases), polytetrafluoroethylene (hereinafter, referred to as PTFE in some cases), tetrafluoroethylene-hexafluoropropylene-vinylidene fluoride-based copolymers, hexafluoropropylene-vinylidene fluoride-based copolymers, and tetrafluoroethylene-perfluorovinyl ether-based copolymer can be exemplary examples.

As the polyolefin resin, polyethylene and polypropylene are exemplary examples.

Two or more of these thermoplastic resins may be used in a mixture form. For example, a binder using a fluororesin and a polyolefin resin can be used.

In this case, it is preferable that a ratio of the fluororesin to the entire cathode mixture be 1% by mass or more and 10% by mass or less, and a ratio of the polyolefin resin to the entire cathode mixture be 0.1% by mass or more and 2% by mass or less. As a result, it is possible to obtain a cathode mixture having a high adhesive force to the cathode current collector and a high bonding force inside the cathode mixture.

(Cathode Current Collector)

As the cathode current collector in the cathode, a strip-shaped member formed of a metallic material such as Al, Ni, or stainless steel as a forming material can be used. Particularly, as the current collector, a current collector that is formed of Al and has a thin film shape is preferable in terms of easy processing and low price.

As the method for supporting the cathode mixture by the cathode current collector, a method in which the cathode mixture is formed by pressurization on the cathode current collector is an exemplary example. In addition, the cathode mixture may be supported by the cathode current collector by preparing a paste of the cathode mixture using an organic solvent, applying and drying the paste of the cathode mixture to be obtained on at least one surface side of the cathode current collector, and fixing the cathode mixture by pressing.

As the organic solvent that can be used when the cathode mixture is pasted, an amine-based solvent, an ether-based solvent, a ketone-based solvent, an ester-based solvent, and an amide-based solvent are exemplary examples.

As the amine-based solvent, N,N-dimethylaminopropylamine, diethylenetriamine and the like are exemplary examples.

As the ether solvent, tetrahydrofuran is an exemplary example.

As the ketone solvent, methyl ethyl ketone is an exemplary example.

As the amide-based solvent, dimethylacetamide and N-methyl-2-pyrrolidone are exemplary examples.

As the method for applying the paste of the cathode mixture to the cathode current collector, a slit die coating method, a screen coating method, a curtain coating method, a knife coating method, a gravure coating method, and an electrostatic spraying method are exemplary examples.

The cathode can be manufactured by the method described above.

[Separator]

Examples of the separator can include materials having a form such as a porous film, a non-woven fabric, or a woven fabric. These materials are formed of, for example, polyolefin resins such as polyethylene and polypropylene, fluororesins, nitrogen-containing aromatic polymers, and the like. In addition, the separator may be formed using two or more of these materials or the separator may be formed by laminating these materials.

An air resistance of the separator by the Gurley method specified by JIS P 8117 is preferably 50 sec/100 cc or more and 300 sec/100 cc or less, more preferably 50 sec/100 cc or more, and still more preferably 200 sec/100 cc or less, in order to favorably permeate the electrolyte while the battery is in use (while the battery is being charged and discharged).

Further, a porosity of the separator is preferably 30 vol% or more and 80 vol% or less and more preferably 40 vol% or more and 70 vol% or less. The separator may be a laminate in which separators having different porosities are laminated.

[Electrolytic Solution]

The electrolytic solution contains an electrolyte and an organic solvent.

As the electrolyte that is contained in the electrolytic solution, lithium salts such as $LiClO_4$, $LiPF_6$, $LiAsF_6$, $LiSbF_6$, $LiBF_4$, $LiCF_3SO_3$, $LiN(SO_2CF_3)_2$, $LiN(SO_2C_2F_5)_2$, $LiN(SO_2CF_3)(COCF_3)$, $Li(C_4F_9SO_3)$, $LiC(SO_2CF_3)_3$, $Li_2B_{10}Cl_{10}$, LiBOB (here, BOB represents bis(oxalato)borate), LiFSI (here, FSI represents bis(fluorosulfonyl)imide), lower aliphatic carboxylic acid lithium salts, and $LiAlCl_4$ are exemplary examples. As the electrolyte, a mixture of two or more of these may be used.

Among these, an electrolyte containing at least one selected from the group consisting of $LiPF_6$, $LiAsF_6$, $LiSbF_6$, $LiBF_4$, $LiCF_3SO_3$, $LiN(SO_2CF_3)_2$, and $LiC(SO_2CF_3)_3$ that contain fluorine is preferably used as the electrolyte.

Moreover, as the organic solvent contained in the electrolytic solution, carbonates, ethers, esters, nitriles, amides, carbamates, sulfur-containing compounds, or solvents obtained by further introducing a fluoro group into the above-described organic solvent (solvents in which one or more hydrogen atoms contained in the organic solvent is substituted by a fluorine atom) can be used.

Examples of the carbonates include propylene carbonate, ethylene carbonate, dimethyl carbonate, diethyl carbonate, ethylmethyl carbonate, 4-trifluoromethyl-1,3-dioxolan-2-one, and 1,2-di (methoxycarbonyloxy)ethane.

Examples of the ethers include 1,2-dimethoxyethane, 1,3-dimethoxypropane, pentafluoropropylmethyl ether, 2,2,3,3-tetrafluoropropyldifluoromethyl ether, tetrahydrofuran, and 2-methyltetrahydrofuran.

As the esters, methyl formate, methyl acetate, and γ-butyrolactone are exemplary examples.

As the nitriles, acetonitrile and butyronitrile are exemplary examples.

As the amides, N,N-dimethylformamide and N,N-dimethylacetamide are exemplary examples.

As the carbamates, 3-methyl-2-oxazolidone is an exemplary example.

As the sulfur-containing compound, sulfolane, dimethyl sulfoxide, and 1,3-propanesarton are exemplary examples.

As the organic solvent, two or more of the above-described organic solvents are preferably used in a mixture form. Among these, a mixed solvent containing a carbonate is preferable, and a mixed solvent of a cyclic carbonate and a non-cyclic carbonate and a mixed solvent of a cyclic carbonate and an ether are still more preferable.

As the mixed solvent of a cyclic carbonate and a non-cyclic carbonate, a mixed solvent containing ethylene carbonate, dimethyl carbonate, and ethyl methyl carbonate is preferable.

The electrolytic solution for which such a mixed solvent is used has a number of features as follows: the electrolytic solution has a broad operating temperature range, does not easily deteriorate even when the lithium secondary battery is charged and discharged at a high current rate, and does not easily deteriorate even after being used for a long period of time.

Moreover, as the electrolytic solution, it is preferable to use an electrolytic solution containing a lithium salt containing fluorine such as $LiPF_6$ and an organic solvent having a fluorine substituent in terms of enhanced safety of lithium secondary batteries to be obtained.

A mixed solvent containing an ether having a fluorine substituent such as pentafluoropropyl methyl ether or 2,2,3,3-tetrafluoropropyl difluoromethyl ether and dimethyl carbonate is still more preferable since the discharge capacity retention rate is high even when the lithium secondary battery is charged and discharged at a high current rate.

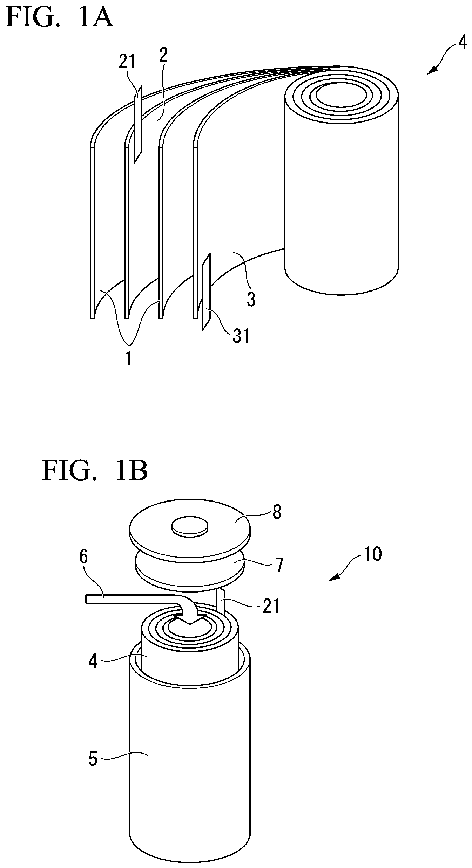

Figs. 1A and 1B are schematic views showing an example of the lithium secondary battery. For example, a cylindrical lithium secondary battery 10 is manufactured as described below.

First, as shown in Fig. 1A, a pair of separators 1 having a band shape, a strip-shaped cathode 2 having a cathode lead 21 at one end, and a band-shaped current collector-integrated anode 3 having an anode lead 31 at one end are laminated in the order of the separator 1, the cathode 2, the separator 1, and the current collector-integrated anode 3 and are wound to form an electrode group 4.

Next, as shown in Fig. 1B, the electrode group 4 and an insulator (not shown) are accommodated in a battery exterior 5, then, a can bottom thereof is sealed, the electrode group 4 is impregnated with an electrolytic solution 6, and an electrolyte is disposed between the cathode 2 and the anode 3. Furthermore, the upper portion of the battery exterior 5 is sealed with a top insulator 7 and a sealing body 8, which makes it possible to manufacture a lithium secondary battery 10.

As the shape of the electrode group 4, a columnar shape in which the cross-sectional shape becomes a circle, an ellipse, a rectangle, or a rectangle with rounded corners when the electrode group 4 is cut in a direction perpendicular to the winding axis can be an exemplary example.

Moreover, as the shape of a lithium secondary battery having such an electrode group 4, a shape that is specified by IEC60086, which is a standard for batteries specified by the International Electrotechnical Commission (IEC), or by JIS C 8500 can be adopted. Shapes such as a cylindrical shape and a square shape can be exemplary examples.

Furthermore, the lithium secondary battery is not limited to the winding-type configuration and may have a lamination-type configuration in which the laminated structure of the cathode, the separator, the anode, and the separator is repeatedly overlaid. As the lamination-type lithium secondary battery, it is possible to exemplify a so-called coin-type battery, a button-type battery, and a paper-type (or sheet-type) battery.

[Examples]

Next, the present invention will be described in more detail using Examples.

<SIM Observation of Cross Section of Metal Anode>

The SIM observation of the cross section of the metal anode, which is the method described in <SIM Observation of Cross Section of Metal Anode> described above, was performed by [Measurement Method 2].

<Measurement of Average Crystal Grain Size of Crystal Grains>

The average crystal grain size of the crystal grains was obtained by the method described in <Measurement of Average Crystal Grain Size of Crystal Grains> described above.

<Measurement of Requirement 1>

The ratio of the linear expansion coefficient ($\beta1/\beta2$) was obtained by the method described in <Measurement of Requirement 1> described above.

<Measurement of Requirement 2>

The average particle size of lithium alloy particles was obtained by the method described in <Measurement of Requirement 2> described above.

<Method for Measuring Vickers Hardness>

The Vickers hardness was measured by the method described in the above

<Method for Measuring Vickers hardness>.

<<Example 1>>

(Casting Step)

4,600 g of aluminum (purity: 99.99% by mass or more) was weighed.

Next, a molten aluminum was obtained by melting aluminum.

Next, the molten aluminum was kept and purified under conditions of a temperature of 740°C for 2 hours and a vacuum degree of 50 Pa.

The molten aluminum was cast using a casting mold of cast iron (22 mm × 150 mm × 200 mm) and dried at 150°C to obtain an ingot.

In order to homogenize a crystal structure of the obtained ingot, heat treatment was performed in the air at 580°C for 9 hours.

(Foil Shape Processing Step)

Rolling was performed under the following conditions. After both sides of the ingot were chamfered by 2 mm, cold rolling was performed from a thickness of 18 mm at a working ratio r of 99.6%. A thickness of the obtained raw material of the metal foil was 50 μm.

The cross section of the raw material of the metal foil was subjected to the SIM observation (magnification: x2000) under the above conditions, and crystal grains were thus observed in the raw material of the metal foil used in Example 1. When a size of the crystal grains was observed for 50 crystal grains, the crystal grain size was within a range of 1 μm or more and 20 μm or less.

Moreover, the Vickers hardness of the raw material of the metal foil was 35 HV.

The obtained aluminum metal foil (thickness: 50 μm) was cut into a disk shape of φ 16 mm to manufacture an anode.

The discharge capacity retention rate of the lithium secondary battery was measured by the method described in <Measurement of Discharge Capacity Retention Rate> described above.

In Example 1, the discharge capacity retention rate calculated by (Expression 1) was 82%.

«Comparative Example 1»

After the foil shape processing step, a current collector-integrated anode was manufactured and a lithium secondary battery was manufactured in the same manner as in Example 1, except that the heat treatment step was performed at 350°C for 3 hours in an atmosphere.

In Comparative Example 1, the SIM observation was performed at a magnification of x30 to obtain an average crystal grain size of crystal grains.

In Comparative Example 1, the discharge capacity retention rate calculated by (Expression 1) was 47%.

[Table 1]

|  | Current collector-integrated anode | | | | Battery characteristic |
| --- | --- | --- | --- | --- | --- |
|  | Average crystal grain size of crystal grains | Vickers hardness | Requirement 1 | Requirement 2 | Discharge capacity retention rate |
| Example 1 | 5 μm | 35 HV | 2 | 10 μm | 82% |
| Comparative Example 1 | 3000 μm | 15 HV | 1.1 | 100 μm | 47% |

«Example 2»

4,500 g of high-purity aluminum (purity: 99.99% by mass or more) and 45 g of high-purity chemical silicon (purity: 99.999% by mass or more) were mixed, and the mixture was heated to 760°C and held at 760°C to obtain a molten Al-Si alloy having silicon contained in an amount of 1.0% by mass.

The metal foil of Example 2 was obtained in the same manner as in Example 1, except that the obtained molten Al-Si alloy was used.

As for the metal foil of Example 2, the SIM observation was performed at a magnification of x2000 to obtain an average crystal grain size of crystal grains.

In Example 2, the discharge capacity retention rate calculated by (Expression 2) was 96%.

«Example 3»

After the foil shape processing step, a current collector-integrated anode was manufactured and a lithium secondary battery was manufactured in the same manner as in Example 2, except that the heat treatment step was performed at 350°C for 3 hours in an atmosphere.

In Example 3, the SIM observation was performed at a magnification of x100 to obtain an average crystal grain size of crystal grains.

In Example 3, the discharge capacity retention rate calculated by (Expression 2) was 88%.

[Table 2]

| | | Current collector-integrated anode | | | Battery characteristic |
|---|---|---|---|---|---|
| | | Average crystal grain size of crystal grains | Vickers hardness | Requirement 1 | Requirement 2 | Discharge capacity retention rate |
| Example 2 | 5 $\mu$m | 65 HV | 1.7 | 10 $\mu$m | 96% |
| Example 3 | 45 $\mu$m | 20 HV | 2.4 | 50 $\mu$m | 88% |

[Reference Signs List]

1: Separator
2: Cathode
3: Current collector-integrated anode
4: Electrode group
5: Battery exterior
6: Electrolytic solution
7: Top insulator
8: Sealing body
10: Battery
21: Cathode lead
31: Anode lead

## Claims

1. An anode for a current collector-integrated secondary battery, comprising:

   an anode surface; and
   a current collector surface,
   wherein the anode for a current collector-integrated secondary battery is a plate-shaped metal anode, and
   an average crystal grain size of crystal grains observed when a cross section of the metal anode is observed in a scanning ion microscope (SIM) image is 200 $\mu$m or less.

2. The anode for a current collector-integrated secondary battery according to Claim 1,
   wherein a metal constituting the metal anode contains one or more selected from the group consisting of aluminum, silicon, tin, and lead.

3. The anode for a current collector-integrated secondary battery according to Claim 1 or 2,
   wherein the metal constituting the metal anode is aluminum.

4. The anode for a current collector-integrated secondary battery according to Claim 3,
   wherein a Vickers hardness of the anode surface is at least 10 HV or more and 70 HV or less.

5. A lithium secondary battery, comprising:

   an electrode group that includes an anode for a current collector-integrated secondary battery including an anode surface and a current collector surface, an electrolyte, and a cathode,
   wherein the anode for a current collector-integrated secondary battery is a plate-shaped metal anode,
   an average crystal grain size of crystal grains observed when a cross section of the metal anode is observed in a scanning ion microscope (SIM) image is 200 $\mu$m or less, and
   the anode for a current collector-integrated secondary battery satisfies one or both of the following Requirements 1 and 2,

(Requirement 1)

when the lithium secondary battery is charged, a ratio of a linear expansion coefficient $\beta 1$ in a direction perpendicular to a surface facing the cathode to a linear expansion coefficient $\beta 2$ in a direction parallel to the surface facing the cathode ($\beta 1/\beta 2$) exceeds 1.3,

(Requirement 2)

an average particle size of lithium alloy particles observed under the following conditions is less than 100 $\mu$m,

[Conditions]

first, lithium ions of 2 mAh/cm$^2$ are charged to the anode for a current collector-integrated secondary battery at a current density of 0.5 mA/cm$^2$,

next, the average particle size of the lithium alloy particles present in the anode surface is calculated from an image obtained by SEM observation.

6.　The lithium secondary battery according to Claim 5, wherein the anode for a current collector-integrated secondary battery contains one or more selected from the group consisting of aluminum, silicon, tin, and lead.

7.　The lithium secondary battery according to Claim 5 or 6, wherein the anode for a current collector-integrated secondary battery is aluminum.

8.　The lithium secondary battery according to Claim 7, wherein a Vickers hardness of the anode surface is at least 10 HV or more and 70 HV or less.

FIG. 1A

FIG. 1B

# FIG. 2

（a）

40a

40

40b

（b）

41

（c）

41

（d）

X

41a

# FIG. 3

（a）

50a
50
50b

（b）

51  52

（c）

51  52

（d）

Y1
Y2  Y2

## INTERNATIONAL SEARCH REPORT

International application No.

PCT/JP2020/046955

### A. CLASSIFICATION OF SUBJECT MATTER

H01M 4/134(2010.01)i; H01M 4/38(2006.01)i; H01M 4/46(2006.01)i; H01M 10/052(2010.01)i

FI: H01M4/134; H01M4/46; H01M4/38 Z; H01M10/052

According to International Patent Classification (IPC) or to both national classification and IPC

### B. FIELDS SEARCHED

Minimum documentation searched (classification system followed by classification symbols)

H01M4/134; H01M4/38; H01M4/46; H01M10/052

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 4-506434 A (ALCAN INTERNATIONAL LIMITED) 05 November 1992 (1992-11-05) claims, page 2, upper right column, lines 1-7, page 2, lower right column, lines 5-6, page 3, upper right column, lines 12-22, drawings | 1-3, 5-7<br>1-8 |
| Y | JP 2019-129059 A (SUMITOMO CHEMICAL CO., LTD.) 01 August 2019 (2019-08-01) claims, paragraphs [0009], [0053], [0064]-[0102] | 1-8 |
| Y | JP 4-206263 A (SEIKO INSTRUMENTS INC.) 28 July 1992 (1992-07-28) claim 1, page 1, right column, line 18 to page 2, upper left column, line 1 | 1-8 |
| A | WO 2018/170928 A1 (REAL POWER INDUSTRIAL LIMITED COMPANY) 27 September 2018 (2018-09-27) | 1-8 |
| A | WO 2018/201125 A1 (BOARD OF REGENTS, THE UNIVERSITY OF TEXAS SYSTEM) 01 November 2018 (2018-11-01) | 1-8 |

☐ Further documents are listed in the continuation of Box C.    ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 10 February 2021 (10.02.2021) | 22 February 2021 (22.02.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

INTERNATIONAL SEARCH REPORT
Information on patent family members

| | | International application no. |
| --- | --- | --- |
| | | PCT/JP2020/046955 |

| Patent Documents referred in the Report | Publication Date | Patent Family | Publication Date |
| --- | --- | --- | --- |
| JP 4-506434 A | 05 Nov. 1992 | WO 1991/000624 A1<br>claims, page 3, lines 22-33, page 6, lines 12-14, page 9, line 25 to page 10, line 8, drawings<br>EP 480988 A1<br>AU 6038790 A<br>CA 2055471 A | |
| JP 2019-129059 A | 01 Aug. 2019 | US 2020/0350573 A1<br>claims, paragraphs [0029], [0109], [0124]-[0175]<br>WO 2019/146231 A1 | |
| JP 4-206263 A | 28 Jul. 1992 | (Family: none) | |
| WO 2018/170928 A1 | 27 Sep. 2018 | US 2020/0099056 A1 | |
| WO 2018/201125 A1 | 01 Nov. 2018 | EP 3615228 A1<br>KR 10-2019-0140449 A<br>CN 110662608 A | |

Form PCT/ISA/210 (patent family annex) (January 2015)

24

**EP 4 080 605 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019229603 A
- JP 5857614 B